# EUROPEAN PATENT APPLICATION

(11) **EP 2 650 672 A1**
(43) Date of publication of application: **16.10.2013**
(21) Application number: 12164065.0
(22) Date of filing: 13.04.2012
(51) Int. Cl.: G01N 21/77, G02B 6/124

(54) **Integrated hydrogel waveguide outcoupler and sensor device**

(71) Applicant: FUNDACIÓN TECNALIA RESEARCH & INNOVATION, 20009 San Sebastian (Guipuzcoa) (ES); Fundació Privada Institut Català de Nanotecnologia, 08193 Bellaterra (Barcelona) (ES); University Of Glasgow, Glasgow G12 8QQ (GB); Institució Catalana de Recerca i Estudis Avançats, 08010 Barcelona (ES)
(72) Inventor: Obieta Vailallonga, Isabel, 20009 SAN SEBASTIAN (Guipúzcoa) (ES); Khokhar, Ali Z., SCOTLAND, G12 8QQ (GB); Bilbao Alba, Leire, 20009 SAN SEBASTIAN (Guipúzcoa) (ES); Saez Martinez, Virginia, 20009 SAN SEBASTIAN (Guipúzcoa) (ES); Sotomayor Torres, Clivia, 08193 BELLATERRA (Barcelona) (ES); Kehoe, Timothy, 08193 BELLATERRA (Barcelona) (ES); Kehagias, Nikolaos, 08193 BELLATERRA (Barcelona) (ES); Francone, Achille, 08193 BELLATERRA (Barcelona) (ES); Delgado Simao, Claudia, 08193 BELLATERRA (Barcelona) (ES); Gadegaard, Nikolaj, SCOTLAND, G12 8QQ (GB)
(74) Representative: Carpintero Lopez, Francisco

(57) **Abstract**

An integrated waveguide outcoupler comprising a dielectric layer and an hydrogel waveguide with a grating, the waveguide being a planar or ridge waveguide. Thanks to this arrangement a sensor comprising the outcoupler, a light source and light detectors can be integrated onto a chip.

## Description

### FIELD OF THE INVENTION

The present invention relates to waveguide sensors, in particular to hydrogel sensors, whose water absorption characteristics change a transmitted optical signal.

### STATE OF THE ART

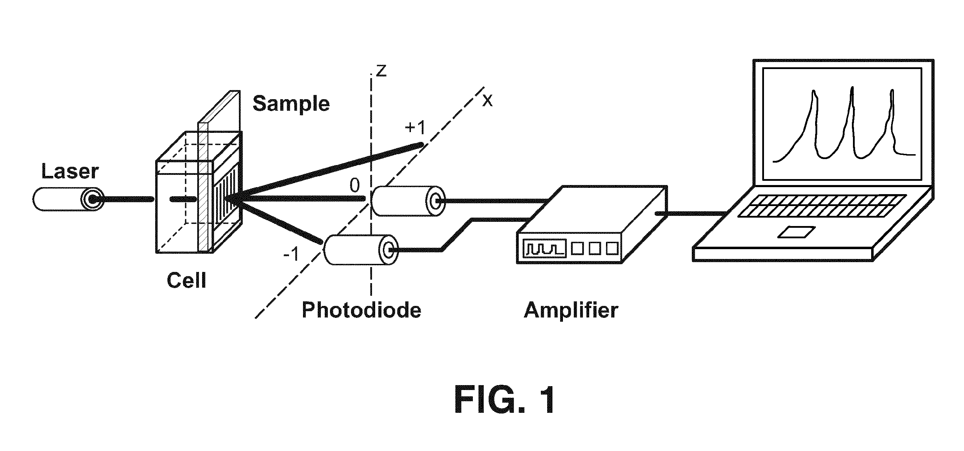

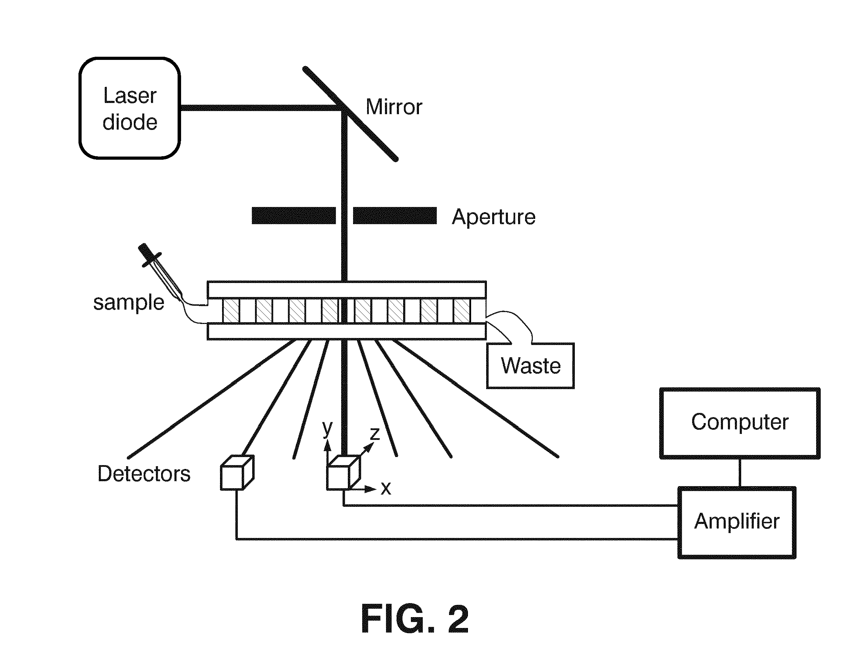

Recent developments in optical sensors include the use of new materials which present a particular behaviour in the presence of a stimulus. As presented in "Multichannel detection using transmissive diffraction grating sensors, D.Mao, P.liu, L.Dong , Polymer Physics 49,1645-1650 (2011)" and "Diffraction grating of hydrogel functionalized with glucose oxidase for glucose detection, chemical Communications 46, 3872-3874 (2010)", hydrogels have chemical groups that make them sensitive to changes in the external environment and, when patterned, they can be used as diffractive optical sensors. Figure 1 shows a typical set-up for this type of sensor, consisting of a laser source, the hydrogel sensor placed by the specimen to be studied and a detector (photodiode) facing the latter. Transmission and incidence of light in this type of sensor is always in the perpendicular direction with respect to the plane containing the ridges (pattern) of the sensor. Figure 2 shows an alternative sensor consisting also of a single grating structure, this time placed between glass sheets and where the specimen in liquid form is made to flow between the sheets. The working principle is the same in both examples: light is directed to the sensor and diffracted into multiple diffraction orders on passing through it in the presence of a sample and then detected coming from it by free-space optics. The change in shape of the grating lines of the hydrogel on absorption and expansion in the presence of the sample results in a change in the intensity of the transmitted diffraction orders that can be detected. By transducing the large change of volume on absorption of water into an optical signal, it is possible to achieve a large variation in signal, of at least one degree of magnitude. The disadvantage of these sensors is that the set up cannot be integrated on a chip and thus is not a suitable design for miniaturization of the sensor device in general with other optical or microfluidic components, or for incorporation in lab-on-a-chip type devices or hand-held devices.
Another type of hydrogel optical sensor is based upon a waveguide design. As presented in Patent W02011157767, "Integrated Optical Waveguide Evanescent Field Sensor", a part of the cladding layer of an optical waveguide may be replaced by hydrogel material. The hydrogel is functionalized to immobilize analyte molecules, and their presence in the cladding layer affects the propagation of the light in the waveguide by interaction with the evanescent field, resulting in a change in speed of propagation of the light. This design requires a reference waveguide to efficiently detect the change in light speed in the sensing waveguide, as a phase shift relative to the reference beam.

Another waveguide sensor design, as presented in EP2088423, "Fibre optic core and biosensor" may comprise an optical core made of hydrogel. This is functionalized to immobilize analyte molecules, and their presence in the waveguide core affects the propagation of the light in the waveguide, which is detected as an absorption line in the transmitted light by spectroscopic analysis. The analyte molecules may be labeled with fluorophores and their presence in the hydrogel core detected by fluorescence in a direction perpendicular to the direction of the waveguide.
Another waveguide sensor design, as presented in "Demonstration of etched cladding fiber Bragg grating-based sensors with hydrogel coating, X. Liu, X. Zhang, J. Cong, J. Xu and K. Chen, Sensors and Actuators B: Chemical 96, 2003, 468-472" is based on replacing a portion of the cladding around a Bragg grating fibre (FBG) with a layer of hydrogel. On absorption of water, the hydrogel expands and applies a longitudinal stress to the FBG, causing a shift in the non-transmitted wavelength of light. The sensor is a complex three dimensional fibre optic structure that is difficult to fabricate.

An advantage of the mentioned waveguide based sensors is that they can be integrated into optical waveguiding circuits for efficient device packaging and miniaturization, however the optical mechanisms by which a chemical or physical change is transduced into an optical signal are relatively complex, requiring either the measurement of optical phase by recombining light with a reference beam, the use of fluorescent markers, or spectral analysis of the transmitted light. Furthermore, the device structures are hybrid polymer or glass with hydrogel materials, which leads to complex fabrication processes.

### SUMMARY OF THE INVENTION

The present invention solves the problems discussed above by combining the simplicity of design and large dynamic range of a diffractive sensor with the suitability for integration of a waveguide outcoupler.

A waveguide outcoupler according to the invention comprises thus a dielectric layer, a core on top and in contact with the dielectric layer and a grating coupler on top of core, wherein the dielectric layer has a lower refractive index than the hydrogel and the grating has grating lines extending in the perpendicular direction to the light propagation direction. The device structure comprises a monolithic patterned hydrogel layer on top of a silicon dioxide layer, or any other dielectric layer with a lower refractive index than the hydrogel, so as to ensure that light is guided through the hydrogel, and may be fabricated in a single imprinting step. This core can comprise a ridge and a planar waveguide or only a planar waveguide. The presence of a chemical or physical change provokes a morphological change in the diffractive outcoupler on top of the waveguide core. This leads to a large change in intensity of the outcoupled light of a single laser wavelength, which can be detected either perpendicular to the plane of the waveguide, or in the light transmitted through the waveguide by means of a photodiode.

The invention thus can be integrated onto a chip to form a sensor. This has the advantage that it is possible to integrate other components of the sensor on the same chip, including optical sources, optical detectors and microfluidic channels to bring materials which require analysis to the sensor. This enables miniaturization of the sensor device, and simplifies the fabrication.

### BRIEF DESCRIPTION OF THE DRAWINGS

To complete the description and in order to provide for a better understanding of the invention, a set of drawings is provided. Said drawings illustrate a preferred embodiment of the invention, which should not be interpreted as restricting the scope of the invention, but just as an example of how the invention can be embodied. The drawings comprise the following figures:
Figure 1 is a representation of a state of the art system.
Figure 2 is a representation of another state of the art sensor.
Figure 3a is a detailed view of the waveguide outcoupler of the invention in the embodiment including a ridge waveguide.
Figure 3b shows a detail of the working principle of the embodiment of figure 3a.
Figure 4a shows an embodiment comprising an outcoupler with a planar waveguide according to the invention.
Figure 4b shows the working principle of the embodiment comprising a planar waveguide according to the invention.
Figure 5 is an schematic view of a sensor device incorporating the outcoupler of the invention.
Figure 6 shows how the outcoupling of light is reduced when water is absorbed by the hydrogel and the ridges of the outcoupler change their dimensions.
Figure 7 is a graph showing the response of the hydrogel sensor to acidic vapour of pH 3.

### DESCRIPTION OF THE INVENTION

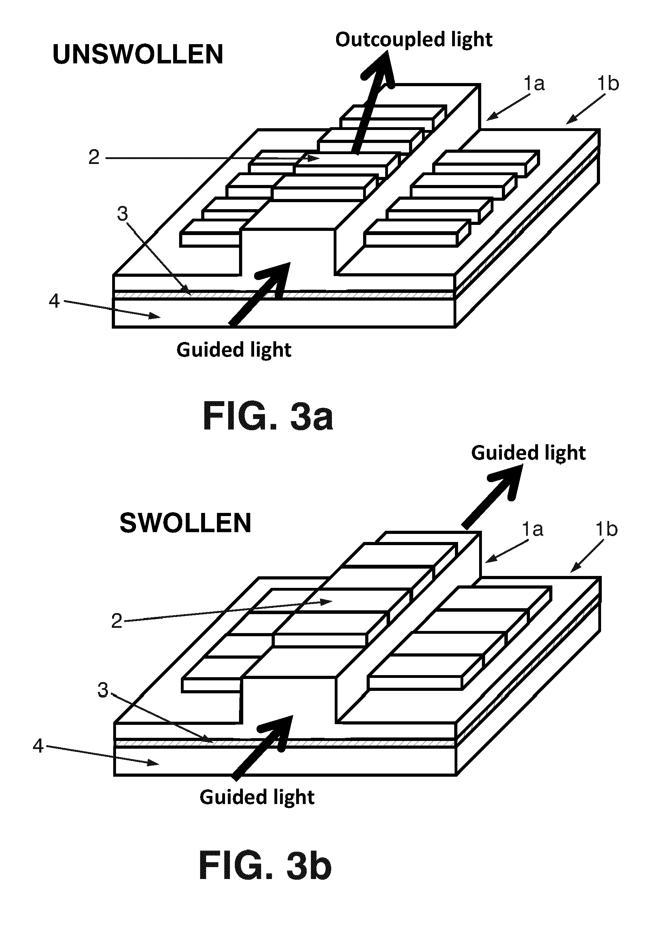

With reference to figure 3a, the outcoupler of the invention in a first embodiment comprises a core with a ridge and a planar waveguide (1a, 1b) with a planar waveguide height of between 0.1 - 10 µm, a ridge width between 1-10 µm, and ridge height of 0.5 - 5 µm, on top of which there is a grating outcoupler (2) with grating lines extending in the perpendicular direction to the light propagation direction, which will be referred to as the direction of the waveguide. Line widths of between 50 nm - 2 µm, and a period of between 300 nm - 2.2 µm, extending for a distance of 0.5 - 5 mm along the waveguide are preferred for a device using visible wavelengths of light, to efficiently guide a single mode of light along the waveguiding section and then couple light out of the waveguide. In one configuration, the waveguide ridge has dimensions of width 3 µm and height 1 µm, and the grating outcoupler has dimensions of period 750 nm, line-width 450 nm and line-height 100 nm. The outcoupler grating lines may continue on either side of the waveguiding ridge, which helps to simplify the fabrication process, without reducing the optical efficiency of the outcoupler. The ridge waveguide is on top of and in contact with a planar layer of hydrogel (1b). The hydrogel layer is on top of a silicon dioxide layer (3), or any other dielectric layer with a lower refractive index than the hydrogel, so as to ensure that light is guided through the hydrogel. The grating, core and dielectric layer are fabricated on a substrate (4), made of for example, silicon.

Figure 3b shows the swelling of the hydrogel in the presence of a sample comprising water.

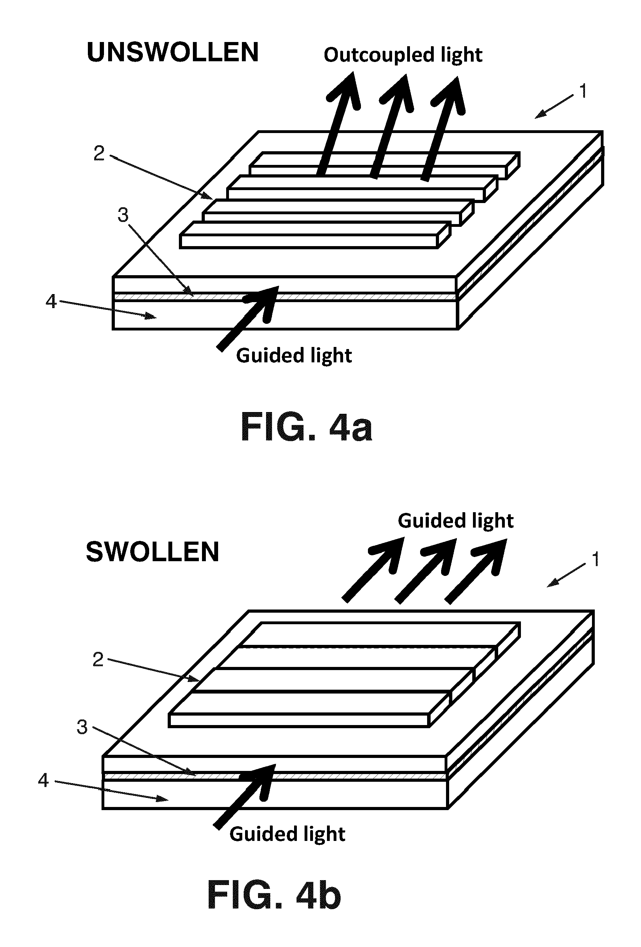

A second embodiment of the outcoupler of the invention, shown in figure 4a, is a planar waveguide (1) on top of which there is a grating coupler (2). The planar waveguide does not include ridges, and guides the light in the layer of hydrogel on top of a silicon dioxide layer, or any other dielectric layer with a lower refractive index than the hydrogel. Preferred dimensions are a core height of 1 µm, and outcoupler grating line widths of between 50 nm - 2 µm, and a period of between 300 nm - 2.2 µm, extending for a distance of 0.5 - 5 mm perpendicular to the direction of light propagation.

The working principle shown in figure 4b is the same as in figure 3b. The ridges in the grating coupler on top of the planar waveguide expand when water is absorbed so that outcoupling of light from the waveguide is reduced. For a light source in the visible spectrum preferred dimensions are the same as in the first embodiment.

The core comprises a hydrogel material that can be composed from any combination of poly(ethylene glycol dimethacrylate), N-isopropylacrylamide, acrylic acid, etc., and those biofunctionalized. Hydrogels are crosslinked polymers that swell in water forming soft and elastic materials, the length and flexibility of the polymeric chains can be controlled and their deformation allows the entry and retention of solutes into the 3D-network. The hydrogel may include a thermal or photo-initiator group to induce polymerisation. The hydrogel material may be sensitive to pH, electric field, selected biomolecules and/or temperature, for example, acrylic acid hydrogels are sensitive to pH and electric field, N-isopropylacrylamide hydrogels are sensitive to temperature. Biomolecule-sensitive hydrogels that undergo swelling changes in response to specific biomolecules could also be used: glucose-sensitive hydrogels, enzymatically degradable hydrogels, antigen-sensitive hydrogels or protein-sensitive hydrogels that can respond to larger biomolecules.

Fabrication of the core is achieved through nanoimprint lithography (NIL). The master stamp for the NIL process is fabricated using electron beam and photolithography to define the structures in photoresist, followed by reactive ion etching to fabricate the structures in silicon wafer. A transparent replica of the silicon master stamp is fabricated on a quartz substrate by UV-cure NIL in a layer of UV-curable resist, which may be an inorganic-organic hybrid polymer such as OrmostampⓇ (micro resist technology GmbH). A second replication step by UV-NIL in Ormostamp is performed to produce a transparent stamp which has the same polarity as the original master stamp. This stamp is used to perform UV-NIL on hydrogel that has been deposited on wafers of silicon with a thermally-grown oxide layer, which acts as a cladding layer to ensure light guiding through the ridge waveguide and prevents leakage of the light into the substrate. The ability to fabricate the outcoupler structure by nanoimprint lithography makes high-volume and low-cost production possible.

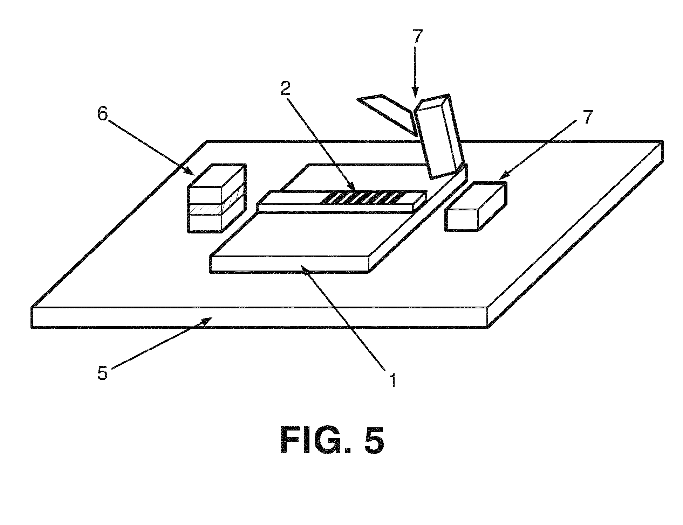

In a particular example shown in figure 5, the sensor comprises a light source, for example a diode laser (6), an outcoupler (1) according to any of the embodiments above and one or more light detectors, like photodiodes (7) all mounted on a chip (5). In contrast with the prior art, where light is either transmitted perpendicular to the plane of the grating or else propagated through a continuous waveguide, here light is guided through the waveguide), and then a portion of the same is directed out from the waveguide when it encounters the grating outcoupler (2). It is possible to detect both the portion of light that leaves the upper surface of the ridge, or else the portion of light that is waveguided past the outcoupler region. The light that is directed away from the surface by the outcoupler can be seen by the eye and so can act as a visual indicator.
In another embodiment, the light may be coupled to the waveguide from a laser via an optical fibre. The detection of the outcoupled light may be realised by either a photodiode or a CCD camera.

The expansion of the hydrogel has the most significant effect on the outcoupler grating (figures 3b, 4b). The grating line widths are increased and their heights above the ridge are reduced in the presence of water, so that the outcoupling efficiency is reduced. This reduces the intensity of the light detected above the surface, and increases the intensity of the light detected at the end of the waveguide. With the range of dimensions given before for the period, height and width of the outcoupler ridges, it is possible to almost completely flatten the ridges, and therefore to reduce the outcoupled light to almost zero. The advantage of this embodiment is that it enables a large contrast in optical signal between the contracted and expanded states of the sensor, which can be clearly distinguished.

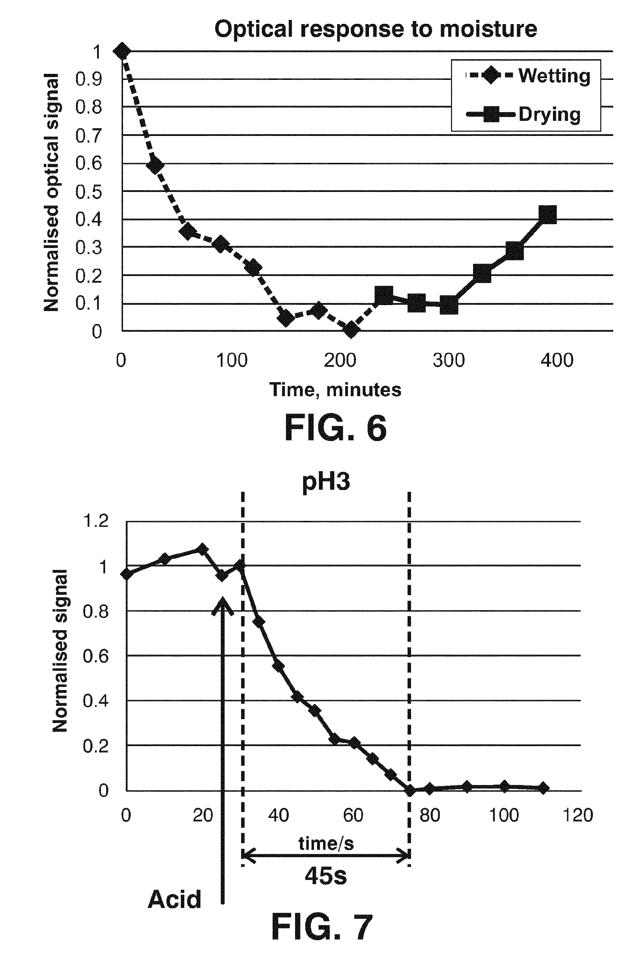

Figure 6 shows how the measured light directed out of the hydrogel layer by the grating coupler is reduced to approximately a few percent of the maximum outcoupled light when the hydrogel absorbs water and expands. Such a large dynamic range in signal intensity improves sensing resolution, and enables two clear states to be defined, indicating the absence or presence of the chemical or physical state being detected. The intensity of the light emitted perpendicular to the surface at room temperature (approximately 20 degrees Celsius) and ambient humidity (approximately 40%) was normalised to the value of 1. To generate the graph, a drop of water was deposited on top of the sample to induce water absorption in the hydrogel as a test of the dynamic range of the material and optical design. At intervals of 30 minutes, moisture was removed from top surface of the sample by blowing with compressed air, and the optical signal was measured. A drop of water was then replaced on the sample to continue the process of absorption. After 210 minutes the optical signal is reduced to almost zero, which represents the full expansion of the hydrogel so that the outcoupler structure is flattened. The sample was then allowed to dry in ambient, and the optical signal returned to 0.4 of its previous dry level. Such a response may find application as a long-term humidity sensor in buildings or storage facilities.

In a particular example, the hydrogel material can be functionalised to react to the presence of acid in the gas phase. The sensitivity of the hydrogel sensor design to an atmosphere saturated with acid vapours of pH 3 is shown in Figure 7. The signal reduces from a stable level to zero in 45 seconds.

In this text, the term "comprises" and its derivations (such as "comprising", etc.) should not be understood in an excluding sense, that is, these terms should not be interpreted as excluding the possibility that what is described and defined may include further elements, steps, etc. On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A waveguide outcoupler comprising a dielectric layer (3), a core (1) on top and in contact with the dielectric layer and a grating coupler (2) on top of core, the grating having grating lines extending in the perpendicular direction to the light propagation direction, **characterized in that** both the core (1) and the grating (2) are made of a hydrogel material and wherein the dielectric layer (3) has a lower refractive index than the hydrogel.

2. A waveguide sensor according to claim 1 wherein the core (1) is formed of a planar waveguide.

3. A waveguide sensor according to claim 2 wherein the core (1) has a height of 0.1 - 10 µm, and wherein the grating (2) has a line width between 50 nm - 2 µm, and a period of between 300 nm - 2.2 µm, extending for a distance of 0.5 - 5 mm along the waveguide.

4. A waveguide sensor according to claim 1 wherein the core (1) is formed of a ridge and a planar waveguide (1a, 1b), the grating being on top of the ridge.

5. A waveguide sensor as in claim 4, wherein the ridge width is between 1-10 µm, the ridge height is between 0.5 - 5 µm and the planar waveguide has a height of 0.1 - 10 µm, wherein the grating has a line width between 50 nm - 2 µm, and a period of between 300 nm - 2.2 µm, extending for a distance of 0.5 - 5 mm along the waveguide.

6. A sensor device comprising a waveguide coupler as in any of the previous claims, a light source (6) at least one light detector (7) all integrated on a chip (5).
